# EUROPÄISCHE PATENTSCHRIFT

(11) **EP 0 520 396 B1**
(45) Veröffentlichungstag und Bekanntmachung des Hinweises auf die Patenterteilung: **28.05.1997**
(21) Anmeldenummer: 92110612.6
(22) Anmeldetag: 24.06.1992
(51) Int. Cl.: G05B 19/18

(54) **Automatische Werkzeugvermessung**
Automatic measuring of a working tool
Mesure automatique d'un outil

(30) Priorität: 24.06.1991 DE 4120746
(43) Veröffentlichungstag der Anmeldung: 30.12.1992
(73) Patentinhaber: Heilig, Günter, D-55566 Sobernheim (DE); Schwab, Erich, D-55595 Boos (DE)
(72) Erfinder: Heilig, Günter, D-55566 Sobernheim (DE); Schwab, Erich, D-55595 Boos (DE)
(74) Vertreter: Raeck, Wilfrid, Dipl.-Ing.

(56) Entgegenhaltungen:
- DE-A- 3 330 280
- DE-A- 3 743 717
- US-A- 4 645 993
- IPE INTERNATIONAL INDUSTRIAL & PRODUCTION ENGINEERING Bnd. 13, Nr. 4, Dezember 1989,MUNICH,DE Seiten 40-49, xp000168915 BERNHARD BELLMANN ET AL 'Measuring Tools Automatically'

## Beschreibung

Die Erfindung bezieht sich auf eine Vorrichtung zu automatischen Vermessen eines Werkzeuges auf einer Schärf-, Werkzeug odgl. Maschine, insbesondere auf einem Meß- und Einstellgerät, die einen in zwei Koordinatenrichtungen einer Ebene verstellbaren Schlitten mit einer auf die Werkzeugschneide ausrichtbaren Optik sowie eine Werkzeugaufnahme aufweist, mit der die Werkzeugschneide in die Koordinatenebene verstellbar ist, wobei die Optik des Schlittens eine an einen Bildverarbeitungsrechner angeschlossene Kamera umfaßt, die Kamera ein Flächenarray mit einem errechneten Fadenkreuz enthält, das als Bezugssystem dem Bildverarbeitungsrechner eingespeichert ist, und der Schlitten mit vom Bildverarbeitungsrechner gesteuerten Motoren zur Verstellung in beiden Koordinatenrichtungen versehen ist.

Es sind optisch-mechanische Meß- und Einstellgeräte für Werkzeuge von Bearbeitungs- und Werkzeugmaschinen bekannt, bei denen ein auf einer vertikalen oder horizontalen Bettführung beweglicher und mit einem Betrachterobjektiv versehener Schlitten an einer beliebigen Position seines Verstellweges an eine Feinverstelleinrichtung an- und abkuppelbar ist.

Beim Betrieb eines solchen Meß- und Einstellgerätes wird das in einem Werkzeughalter befestigte Werkzeug in einer Aufnahme gespannt, die der Werkzeughalteraufnahme der Bearbeitungsmaschine entspricht, auf der das Werkzeug zum Einsatz kommen soll. Damit in einem automatisch ablaufenden Bearbeitungsvorgang beispielsweise ein Bohrwerkzeug die vorgeschriebene Bohrtiefe genau einhält, muß die Position der Werkzeugspitze in Bezug auf die Aufnahme des Werkzeughalters bestimmt werden. Die am Einstellgerät ermittelten Maße, z.B. ein Längenmaß oder die Koordinatenposition einer außerzentrisch angeordneten Werkzeugschneide, sind auf die Aufnahme der Werkzeugmaschine übertragbar.

Um das auf dem Schlitten des Einstellgerätes angeordnete Betrachterobjektiv auf die Schneide des in der Aufnahme eingespannten Werkzeuges auszurichten, kann man den Schlitten über eine Grobverstellung schlell in das Sichtfeld des Betrachterobjektivs bzw. so nahe wie möglich an das auf einem Sichtschirm abgebildete Fadenkreuz heranfahren und danach die weiteren notwendigen Schlittenbewegungen bis zum Abgleich durch einen Feinverstelltrieb vornehmen.

Wenn auf dem Einstellgerät beispielsweise die Werkzeugschneide eines Ausdrehwerkzeuges in Form einer Bohrstange vermessen werden soll, müssen die Meßwerte X für den radialen Abstand der Schneidenspitze von der Werkzeugachse und Z für den Längsabstand der Werkzeugschneide von der Aufnahme ermittelt werden.

Dazu wird das Werkzeug in der Aufnahme des Einstellgerätes eingespannt und der Projektor bezüglich der beleuchteten Werkzeugschneide so positioniert, daß die Werkzeugschneide genau in das Fadenkreuz des Projektors gelangt. Beim Heranfahren des Koordinatenschlittens des Einstellgerätes mit dem Projektor bildet sich die Werkzeugschneide zunächst unscharf im Projektor ab. Durch Betätigen eines Handrades wird die Aufnahme mit der Schneide in die Koordinatenebene gedreht und im Projektor scharf gestellt. Nach dieser Scharfstellung wird durch Betätigung von für die Feinverstellung vorgesehenen Handrädern der Koordinatenschlitten soweit verstellt, bis die Werkzeugschneide genau im Fadenkreuz des Projektors erscheint. Für das nunmehr genau vermessene Werkzeug können an einem Digitalzähler die Meßwerte X und Z abgelesen werden.

Das vorbeschriebene Meßverfahren ist weitgehend von der Qualifikation der Bedienungsperson am Einstellgerät abhängig, und zwar sowohl hinsichtlich der Einstellzeit als auch der Einstellgenauigkeit. Die hierbei erreichbare Genauigkeit liegt zwischen 0,002 und 0,004 mm.

Die ermittelten Meßwerte X und Z können abgespeichert und bei Gebrauch des Werkzeuges vom Rechner der Bearbeitungsmaschine abgerufen werden, wenn das vermessene Werkzeug zum Einsatz kommt. Zusätzlich oder alternativ können die Meßwerte X und Z auch ausgedruckt werden und beim Werkzeug verbleiben, so daß sie erst bei Einsatz des Werkzeuges von der Bedienungsperson der Bearbeitungsmaschine eingegeben werden.

Wenn eine nachgeschliffene oder neu eingesetzte Werkzeugschneide am Werkzeug selbst einstellbar ist, kann das Vermessen mit einem Einstellvorgang kombiniert werden. In diesem Fall kommt es darauf an, die Werkzeugschneide auf vorgegebene Koordinatenwerte einzustellen. Dazu werden die für den Betrachter am Projektor erkennbaren Abweichungen der Meßwerte von den Sollwerten durch geeignete Maßnahmen zur Verstellung der Werkzeugschneide bezüglich des Werkzeughalters beseitigt, z.B. durch Lösen von Spannschrauben, Verschieben bzw. Klopfen des Werkzeuges und Anziehen der Spannschrauben.

Aus DE-OS 37 43 717 ist ein Einstellgerät mit Bildverarbeitung bekannt, mit dem Werkzeuge jedoch nur gemessen, nicht aber eingestellt werden können. Dieses Einstellgerät besitzt anstelle des Projektors eine CCD-Kamera und einen Monitor, auf dem die Werkzeugschneide dargestellt wird. Über Schnittstellen ist an Kamera und Monitor ein Bildverarbeitungsrehner angeschlossen, der außerdem einen Ausgang für einen Digitalzähler aufweist.

Aus der US-A-4 645 993 ist eine iterative Werkstück positionierung bekannt, wobei allerdings die Iteration keinen Einfluß auf die Genanigkeit der Mittelpunkt bestimmung hat.

Beim Meßvorgang wird der die Kamera tragende Koordinatenschlitten des Einstellgerätes zunächst allgemein auf die Werkzeugschneide ausgerichtet, bis die Schneide auf dem Monitor erscheint. Die Aufnahme mit dem Werkzeug wird um dessen Drehachse soweit verstellt, bis die Werkzeugschneide auf dem Monitor scharf abgebildet ist. Nunmehr ist der Bildverarbeitungsrechner in der Lage, mit Hilfe des von der Kamera aufgezeichneten Bildes die Δ X- und Δ Z-Werte, d.h. die Abstände der Schneide in X- und Z-Richtung vom Koordinaten-Nullpunkt zu errechnen, der sich in einem in der Kamera integrierten Flächenarray befindet, das von dem von der Kamera aufgenommenen Bild überlagert wird und dem Bildverarbeitungsrechner als Bezugssystem dient. Die Position des Nullpunktes bezüglich der Werkzeugaufnahme sowie bezüglich der Werkzeugachse, korrigiert um die errechneten Δ X- und Δ Z-Werte, liefern das endgültige Meßergebnis, das an den Digitalzähler ausgegeben wird.

Mit diesem Meßverfahren ist ein weitgehend von der Bedienungsperson unabhängiges Messen möglich. Die Meßgenauigkeit hängt nicht mehr von der Bedienungsperson, sondern nur vom Meßsystem selbst ab. Nachteilig sind bei diesem System der Bildverarbeitung sehr hohe Gestehungskosten und eine relativ niedrige Meßgenauigkeit, die insbesondere bei größeren Δ X-und Δ Z-Werten noch geringer ist. Die hohen Kosten sind auf den dadurch verursachten Aufwand zurückzuführen, daß die Kamera mit einem CCD-Flächenarray ausgestattet ist, das sehr genau sein muß, und hohe Anforderungen an die Optik der Kamera gestellt werden. Ferner benötigt das System einen hochwertigen Rechner mit großer Rechenleistung, um die Abstandswerte in den X- und Z-Richtungen mit der oben genannten Meßgenauigkeit errechnen zu können.

Das bekannte Einstellgerät wird häufig mit zwei Kameras ausgestattet. Daraus resultiert ein zusätzlicher mechanischer Aufwand, da die beiden Kameras automatisch zum Einsatz kommen müssen. Außerdem sind solche Einstellgeräte mit motorischen Antrieben ausgestattet, um die Bedienungsperson von manuellen Eingriffen zu entlasten. Diese Automatik führt jedoch nicht zu einer Verbesserung der Meßgenauigkeit, sondern lediglich zu einem verbesserten Bedienungskomfort.

Darüber hinaus ist die Abbildungsoptik einer Kamera immer mit Mängeln behaftet, die zu Abbildungsfehlern (Aberrationen) führen, wobei aber die Größe der Fehler mit dem Abstand des Abbildungsgegenstandes vom Bildfeldmittelpunkt zunimmt. Auch ändern sich die Abbildungsfehler ausgehend vom Bildfeldmittelpunkt in jeder Richtung anders, so daß ihre rechnerische Berücksichtigung nicht möglich ist. Zusätzlich wird das Ausmessen einer zu vermessenden Werkzeugschneide mit zunehmendem Abstand vom Bildfeldmittelpunkt auch deshalb immer schwieriger, weil die dort größeren Aberrationen zu Auflösungsmängeln der opto-elektronischen Kamera und zu einem verbreiterten Graukantenverlauf führen und sich unter diesen Bedingungen die Lage der Werkzeugschneide selbst mit hohem Rechenaufwand nur näherungsweise bestimmen läßt, was zudem leistungsstarke Rechner oder dementsprechend mehr Rechenzeit erfordert.

Ein weiterer Nachteil dieser bekannten Vorrichtung besteht folglich auch darin, daß für ein und dasselbe Werkzeug unterschiedliche Einstellmaße berechnet werden, wenn die Messungen in verschiedenen relativen Positionen von Werkzeugschneide zu Koordinaten-Nullpunkt durchgeführt werden. Um dies zu vermeiden, müssen die Einstellmaße mit einer geringeren Genauigkeitsgüte ausgegeben werden.

Demgegenüber hat sich die vorliegende Erfindung als Aufgabe gestellt, eine Vorrichtung der eingangs angegebenen Art dahingehend zu verbessern und weiterzubilden, daß unabhängig von der relativen Anfangslage des Abbildungsgegenstandes zum Fadenkreuz bei Messungsbeginn eine automatische Werkzeugvermessung reproduzierbar mit hoher Meßgenauigkeit ermöglicht und der dazu erforderliche Geräteaufwand im Verhältnis zur erreichbaren hohen Genauigkeit und Schnelligkeit der Messungen verhältnismäßig niedrig gehalten wird. Gleichzeitig soll es mit der Vorrichtung auch möglich sein, Werkzeuge unter Ausnutzung von der automatischen Vermessung dienender Teile oder Baugruppen der Vorrichtung schnell einzustellen.

Zur Lösung dieser Aufgabe ist eine Vorrichtung zum automatischen Vermessen von Werkzeugen erfindungsgemäß durch folgende Merkmale gekennzeichnet:
- der Fadenkreuz-Nullpunkt ist in der Bildfeldmitte der Kamera angeordnet,
- der Rechner enthält ein Arbeitsprogramm, mit dem ständig die Abstandswerte der Werkzeugschneide von den Koordinatenachsen des Fadenkreuzes ermittelt sowie die Abstandswerte kompensierende Impulse an die Motoren solange abgegeben werden, bis in der neuen Werkzeugposition die Abweichungen in der X- und Z-Richtung Null sind und somit das Werkzeug genau vermessen ist,
- der Rechner ist über eine Schnittstelle mit einem Digitalzähler verbunden, der die auf die Werkzeugaufnahme bezogenen Koordinatenmeßwerte (X, Z) der Werkzeugschneide anzeigt.

Die erfindungsgemäße Meßvorrichtung, mit der sich Werkzeuge unabhängig von einer Bedienungsperson genau vermessen lassen, unterscheidet sich vorteilhaft von der weiter oben beschriebenen bekannten Meßvorrichtung, bei der mit dem Bildverarbeitungssystem die vorhandenen Abstände der Werkzeugschneide in den beiden Koordinatenrichtungen von dem dem Rechner eingegebenen Fadenkreuz errechnet und angegeben werden und dies errechnete Ergebnis aus den angeführten Gründen verhältnismäßig ungenau ist. Demgegenüber werden bei der erfindungsgemäßen Vorrichtung mit dem Bildverarbeitungssystem zunächst mehr oder weniger angenäherte Abstandswerte der Werkzeugschneide in den X- und Z-Achsen errechnet und daraufhin die Koordinatenschlitten des Gerätes in der X- bzw. Z-Achse entsprechend verstellt. Aufgrund der ständig automatisch erneut durchgeführten Messungen und dementsprechend aktualisierten Verstellbewegungen werden die Abstände allmählich vollständig beseitigt, d.h. die Achsen des Fadenkreuzes der Bildkamera mit der Werkzeugschneide zur Deckung gebracht. Die dadurch erreichbare wesentlich höhere Genauigkeit ist darauf zurückzuführen, daß die während der vom Rechner in Verbindung mit der Kameraoptik und den Stellmotoren durchgeführten Meß- und Nachstellschritten die gemessenen Abstandswerte ständig abnehmen und somit das durch die Qualität der Kamera und die Kapazität des Rechners verfügbare Auflösungsvermögen den ständig kleiner werdenden Differenzwerten zur Verfügung steht. Bei jeder nachfolgenden Messung werden folglich etwaige Aberrationsfehler der Kameraoptik zwangsläufig beseitigt, da sich der Fadenkreuz-Nullpunkt im praktisch abbildungsfehlerfreien mittleren Linsenbereich befindet. Dabei wird unabhängig von der Ausgangslage bei Messungsbeginn für die Schneidkante immer die gleiche Endstellung erreicht und folglich immer Meßwerte gleicher Güte ermittelt. Mit Hilfe dieser Meßmethode läßt sich die Meßgenauigkeit bis in den Bereich von +/- 0,001 mm steigern, wozu im Vergleich zum Stand der Technik erheblich gerignere Anforderungen an die Geräteempfindlichkeit und den Rechneraufwand zu stellen sid, was einer größeren Kostenreduzierung zu Gute kommt. Darüber hinaus lassen sich Teile und Meßabläufe der erfindungsgemäßen Vorrichtung auch zum Einstellen von Werkzeugen vorteilhaft anwenden.

In weiterer Ausgestaltung der Vorrichtung wird vorgeschlagen, daß die Werkzeugaufnahme einen vom Bildverarbeitungsrechner derart gesteuerten Stellmotor aufweist, daß der Rechner zu Beginn des Ablaufes des Arbeitsprogramms bei Bedarf (Unschärfe der Werkzeugabbildung) solange Impulse an den Stellmotor abgibt, bis sich die Werkzeugschneide in der Koordinatenebene befindet.

Zweckmäßigerweise kann ein insbesondere auf dem Koordinatenschlitten angeordneter Monitor an den Bildverarbeitungsrechner angeschlossen sein, auf dem das von der Kamera gelieferte Bild einschließlich des Flächenarray mit dem errechneten Fadenkreuz abgebildet sind. Zusätzlich können auf dem Monitor LED-Anzeigen vorgesehen sein, die nach Beendigung des Arbeitsprogramms des Rechners für die Scharfeinstellung der Werkzeugschneide und für den Null-Abgleich in Richtung X-Achse und Z-Achse aufleuchten. Außerdem können akkustische Signalgeber zur Anzeige der Beendigung des Meßvorganges om der bzw. um die jeweilige Achse vorgesehen sein, so daß die Bedienungsperson bei Durchführung von Einstellarbeiten, soweit sie ohne den vollständigen automatischen Arbeitsablauf durchgeführt werden, über das Erreichen des jeweiligen Null-Abgleiches informiert wird.

An den Bildverarbeitungsrechner können zusätzliche Stellmotoren zur Grobverstellung der Koordinatenschlitten und auch zur Verdrehung der Werkzeugaufnahme zwecks Scharfeinstellung der Werkzeugschneide angeschlossen sein. Die Koordinatenschlitten können unabhängig von den Stellmotoren auch manuell z.B. mit Hilfe von auf Verstellspindeln sitzenden Handrädern verstellbar sein. Zum Starten des Arbeitsprogrammes, beginnend mit der Scharfeinstellung der Werkzeugschneide, kann ein Automatikschalter vorgesehen sein. Bei einer Ausführungsform ist die Anordnung so getroffen, daß die mit dem Startknopf ausgelöste Automatik nach der Scharfeinstellung der Werkzeugschneide unterbrochen wird, so daß zum Starten des folgenden Arbeitsprogramms der Automatikschalter nochmals betätigt werden muß oder dafür eine zusätzliche Automatiktaste vorgesehen ist. Diese Unterteilung und Drucktastenbetätigung ist beim Einstellen von Werkzeugen zweckmäßig, wo die Scharfeinstellung jedesmal erneut vorgenommen wird, nachdem die Werkzeugschneide nachgestellt worden ist.

Ferner können im Bildverarbeitungsrechner Sicherungsmittel vorgesehen sein, die das Arbeitsprogramm der automatischen Werkzeugvermessung erst einschalten, nachdem die Werkzeugschneide mit Hilfe der der Werkzeugaufnahme zugeordneten Stelleinrichtung scharf abgebildet ist. - Die Vorrichtung nach der Erfindung ist nicht an bestimmte Bauformen von Meß- und Einstellgeräten gebunden, sondern läßt sich an alle beliebigen Einstellgeräte anbauen. Sie ist ferner als Baugruppe an einer Werkzeug- oder Erodiermaschine zur automatischen Vermessung eingespannter Werkzeuge einsetzbar.

Die Erfindung erstreckt sich auch auf ein Verfahren zum Einstellen eines Rotationswerkzeuges auf einem Einstellgerät, das einen in zwei Koordinatenrichtungen einer Ebene verstellbaren Schlitten mit einer auf die Werkzeugschneide ausrichtbaren Optik sowie eine Werkzeugaufnahme aufweist, mit der die Werkzeugschneide in die Koordinatenebene verstellbar ist, wobei die Optik des Schlittens eine an einen Bildverarbeitungsrechner angeschlossene Kamera umfaßt, die Kamera ein Flächenarray mit einem errechneten Fadenkreuz enthält, das als Bezugssystem dem Bildverarbeitungsrechner eingespeichert ist, und der Schlitten mit vom Bildverarbeitungsrechner gesteuerten Motoren zur Verstellung in beiden Koordinatenrichtungen versehen ist, und wobei der Schlitten einen an den Bildverarbeitungsrechner angeschlossenen, das Bildfeld der Kamera wiedergebenden Monitor aufweist, und der Rechner mit einem die Koordinatenmeßwerte (X, Z) der Werkzeugschneide anzeigenden Digitalzähler verbunden ist, gekennzeicluet durch folgende Schritte:
a) der Schlitten wird auf die durch den Digitalzähler angezeigte Sollposition für die einzustellende Werkzeugschneide eingestellt,
b) die Werkzeugschneide wird manuell soweit in das Bildfeld nachgestellt, bis sie auf dem Monitor sichtbar ist,
c) durch Betätigen eines Automatikschalters zur Ausführung der automatischen Scharfeinstellung wird die Werkzeugschneide durch Drehen der Werkzeugaufnahme zur Scharfabbildung auf dem Monitor gebracht,
d) zur Einstellung einer Sollposition eines X- oder Z-Wertes der Werkzeugschneide bezüglich einer der Fadenkreuz-Achsen wird die Werkzeugschneide in der betreffenden Richtung, X oder Z, so lange manuell auf die zugehörige Achse des Fadenkreuzes verstellt, bis eine zugeordnete LED-Anzeige den Null-Abgleich signalisiert.

Das Verfahren kann für den Fall, daß die Werkzeugschneide zwei Sollpositionen aufweist, deren Werte beide eingestellt werden sollen, dadurch weitergebildet sein, daß Schritt d) des vorbeschriebenen Verfahrens für den betreffenden anderen Wert, Z bzw. X, durchgeführt wird, und für den Fall, daß die Werkzeugschneide nur eine Sollposition aufweist, die durch Anwendung des vorbeschriebenen Verfahrens bereits eingestellt ist, und zusätzlich das unbestimmte Abstandsmaß bezüglich der anderen Achse ausgemessen werden soll, dadurch weitergebildet sein, daß durch erneutes Betätigen des Automatikschalters zur Ausführung des automatischen Meßvorgangs die Werkzeugschneide solange automatisch auf die betreffende Achse des Fadenkreuzes verstellt wird, bis die zugehörige LED-Anzeige den Null-Abgleich signalisiert.

Weitere Merkmale und Vorteile von Vorrichtung und Verfahren nach der Erfindung ergeben sich aus der nachfolgenden Beschreibung eines Ausführungsbeispiels sowie aus den Zeichnungen, die ebenfalls erfindungswesentliche Merkmale darstellen. Die einzelnen Merkmale, insbesondere der Ansprüche, können jeweils für sich oder in beliebiger anderer Kombination weitere Ausführungsformen der Erfindung bilden. Es zeigen, jeweils schematisch,
- Fig. 1: eine Übersicht über eine Vorrichtung nach der Erfindung in Anwendung bei einem Meß- und Einstellgerät,
- Fig. 2: ein Beispiel eines in der Bildkamera integrierten Flächenarray,
- Fig. 3: eine Darstellung des Monitorbildschirms mit LED-Anzeigen und einer unscharf abgebildeten Werkzeugschneide,
- Fig. 4: einen Monitorschirm mit scharfgestellter und genau eingestellter vermessener Werkzeugschneide,
- Fig. 5: eine Übersicht über die zur erfindungsgemäßen Vorrichtung gehörenden Baugruppen im Zustand vor Beginn des automatischen Meßvorganges und
- Fig. 6: die Vorrichtung in ähnlicher Darstellung wie in Fig. 5 nach Beendigung des automatischen Meßvorgangs.

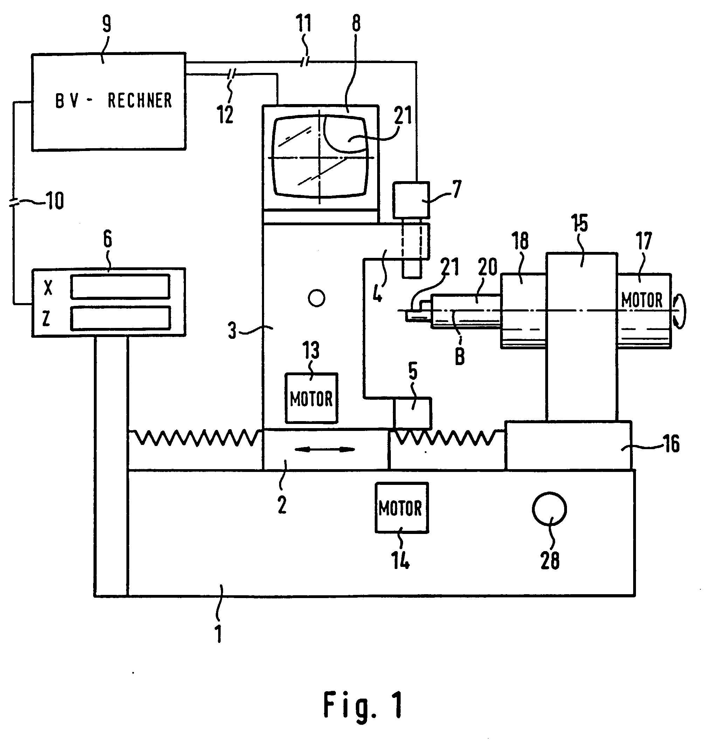

Ein in Verbindung mit der Vorrichtung nach der Erfindung ausgestattetes Einstellgerät umfaßt entsprechend Fig. 1 ein Gerätebett 1 mit einer durch einen Balg abgedeckten Führung, auf der ein unterer Koordinatenschlitten 2 in waagerechter Richtung verstellbar ist, der seinerseits eine Führung für einen in senkrecht zur Zeichenebene verlaufender Richtung verstellbaren oberen Koordinatenschlitten 3 trägt. Auf einem vom Oberteil des Koordinatenschlittens 3 ausgehenden Arm 4 ist eine Fernseh-Bildkamera 7 eingespannt, während oben auf dem oberen Koordinatenschlitten ein Bildschirm bzw. Monitor 8 angeordnet ist, der auch an beliebiger anderer Stelle aufgestellt sein kann. Mit Abstand unterhalb der Kamera ist am oberen Koordinatenschlitten 3 eine Lichtquelle 5 angeordnet, so daß in dem Abstand zwischen dieser und der Kamera 7 die Schneide 21 des zu vermessenden Werkzeuges 20 aufgenommen werden kann.

Die senkrecht zur Zeichenebene von Fig. 1 stehende Koordinatenebene, auf die die Kamera scharf eingestellt ist und in der die Schneide des Werkzeuges zu vermessen ist, verläuft durch die waagerechte Achse B eines Aufnahmegehäuses 15, das beispielsweise zusammen mit anderen nicht gezeigten Aufnahmen für eine Bohrstange, einen Stahlhalter und/oder für Werkzeuge mit Zylinderschaft oder Steilkegel auf einem auf dem Gerätebett 1 gelagerten Revolvertisch 16 angeordnet ist. Kamera 7 und Monitor 8 ersetzen den sonst bei Standard-Einstellgeräten vorhandenen Projektor. Sie sind über Schnittstellen 11 bzw. 12 ihrer Anschlußleitungen mit einem Bildverarbeitungsrechner 9 verbunden, der über einen Ausgang und eine Schnittstelle 10 an einen Digitalzähler 6 angeschlossen ist.

Das erfindungsgemäße Einstellgerät besitzt Stellmotoren 13 und 14 für die Verstellung der Koordinatenschlitten und der darauf angeordneten Kamera 7. Außerdem kann ein Stellmotor 17 vorgesehen sein, der eine im Aufnahmegehäuse 15 gelagerte Aufnahme 18 antreibt, um das darin eingesetzte bzw. eingespannte Bohrwerkzeug 20 um die rotatorische Achse B zu verstellen. Mit Hilfe dieser Stellmotoren wird eine automatische Werkzeugvermessung durchgeführt, ohne daß sich die Bedienungsperson um das Messen zu kümmern braucht. Zusätzlich zu den beschriebenen Stellmotoren können nicht gezeigte Handräder vorgesehen sein, um bei Bedarf manuell in den Meß- oder Einstellablauf eingreifen zu können.

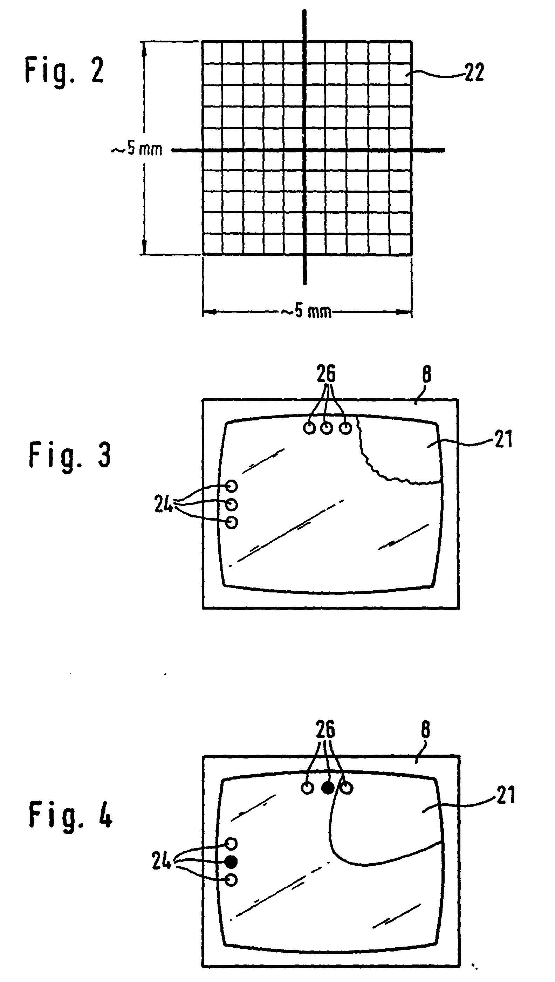

In Fig. 2 ist ein auf dem Monitor abgebildetes Flächenarray 22 der Kamera 7 dargestellt. Das Flächenarray ist etwa 5 x 5 mm groß und in der Kamera integriert. Das eingezeichnete Fadenkreuz ist im Bildspeicher des Bildverarbeitungsrechners 9 errechnet und wird der auf dem Monitor 8 abgebildeten Werkzeugschneide überlagert.

In Fig. 3 ist der Monitor 8 mit einer bei Beginn der Werkzeugvermessung sich zunächst unscharf abbildenden Werkzeugschneide 2 dargestellt. Auf dem Monitor sind zwei Gruppen 24, 26 von jeweils drei LED-Anzeigen angeordnet, von denen die mittleren gemeinsam beim abgeschlossenen Einstell- oder Meßvorgang einschließlich Scharfstellung für die rotatorische Achse B aufleuchten. Diese oder andere Anzeigen können durch ein akustisches Signal begleitet werden. Je eine seitliche Leuchtdiode der Gruppe 24, 26 zeigt die abgeschlossene Einstellung (Differenz = 0) bezüglich der X-Achse bzw. Z-Achse und die Leuchtdiode auf der anderen Seite die vom Rechner erkannte Scharfeinstellung um die Achse B an.

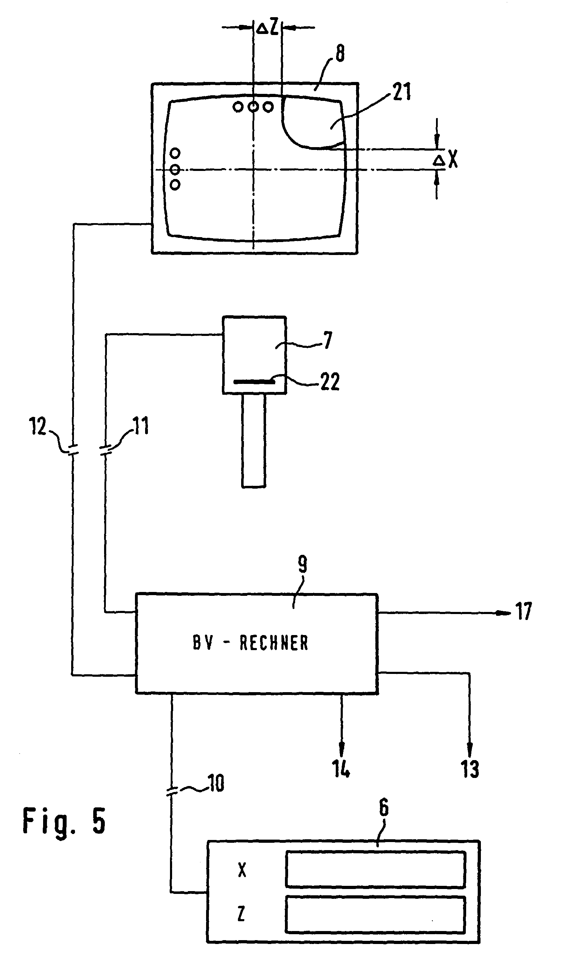

Durch Betätigung eines Automatik-Schaltknopfes 28 in Fig. 1 beginnt der automatische Programmablauf beim Vermessen und/oder Einstellen der Werkzeugschneide. Beim Meßvorgang erkennt der Bildverarbeitungsrechner 9 zunächst die unscharf abgebildete Schneide 21 des Werkzeugs 20. Er liefert zur Scharfeinstellung Impulse an den Stellmotor 17, der die Aufnahme 18 solange dreht, bis der Rechner 9 die in Fig. 4 dargestellte Scharfeinstellung der Werkzeugschneide wahrgenommen hat. Diese Scharfeinstellung wird auf dem Bildschirm durch je eine LED- Anzeige der Gruppe 24, 26 gemäß Fig. 3 angezeigt.

Anschließend erkennt der Bildverarbeitungsrechner 9 entsprechend seinem Programm, daß die Werkzeugschneide 2 sich um die Beträge ΔX und ΔZ vom errechneten Fadenkreuz entfernt befindet. Der Rechner gibt deshalb an die Stellmotoren 13 und 14 Impulse aus, mit denen die Koordinatensschlitten des Einstellgerätes so weit gesteuert werden, bis die Abstände zwischen dem Fadenkreuz und der abgebildeten Werkzeugschneide beseitigt sind bzw. die ΔX- und ΔZ-Werte zu Null werden.

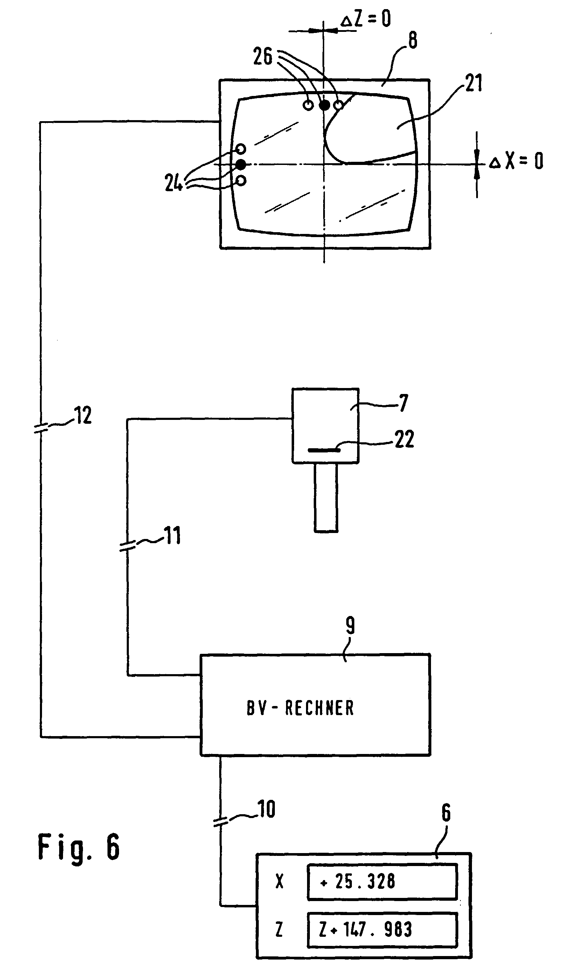

Nunmehr ist das Werkzeug genau eingestellt, und der Bildverarbeitungsrechner 9 gibt über die Schnittstelle 10 an den Digitalzähler 6 die Fertigmeldung aus, von dem das genaue Meßergebnis abgelesen oder ausgedruckt werden kann. Die Meßgenauigkeit liegt bei diesem Verfahren im Bereich zwischen +/- 0,001 mm. Das Erreichen des genauen Meßergebnisses wird gleichzeitig am Monitor 8 durch die LED-Anzeigen 24, 26 dargestellt und kann auch von einem akustischen Signal begleitet werden. Dieser Zustand ist auf dem Monitor in der Darstellung gemäß Fig. 6 gezeigt, wo die mittleren LED der Anzeigegruppen 24 für die X-Achse und 26 für die Z-Achse aufleuchten.

Bei der milder erfindungsgemäßen Vorrichtung unabhängig von einer Bedienungsperson durchgeführten neuartigen Werkzeugvermessung werden mit Hilfe des Bildverarbeitungssystems nach Erfassung und Errechnung der angenäherten ΔX- und ΔZ-Werte die Koordinatenschlitten des Einstellgerätes in der X- bzw. Z-Achse entsprechend verstellt, wobei ständig erneute Messungen und Nachstellungen erfolgen, bis die Differenzen = 0 geworden sind. Die gegenüber der einmaligen Errechnung der ΔX- und ΔZ-Werte bei dem eingangs beschriebenen bekannten Meßgerät erfindungsgemäß wesentlich erhöhte Genauigkeit wird erreicht, weil mit den im Zuge des Meß- und Nachstellverfahrens immer kleiner werdenden Differenzen das in der Vorrichtung enthaltene Auflösungsvermögen für ständig kleinere Differenzwerte zur Verfügung steht und somit der Abgleich immer genauer wird, so daß im Vergleich erheblich geringere Anforderungen an die Geräteempfindlichkeit und den Rechneraufwand gestellt zu werden brauchen. Außerdem erfolgt über die Schnittstelle 10 vom Bilverarbeitungsrechner 9 an den digitalen Zähler 6 lediglich eine Fertigmeldung und keine Übertragung von ΔX- oder ΔZ-Werten.

Der automatisch ohne Bedienungsperson ablaufende Meßvorgang wird auf einem Meß- und Einstellgerät z. B. bei Fräsern, Schneidstählen und anderen, nicht rotierenden Werkzeugen angewendet; denn diese sind nach dem Schleifen bzw. nach der Anlieferung in ihren Maßen vorgegeben und können deshalb nur vermessen, nicht aber eingestellt werden.

Demgegenüber wird bei Rotationswerkzeugen ein Einstellvorgang durchgeführt, insbesondere bei Bohrstangen, Bohrern oder Fräsköpfen mit einstellbaren Schneiden. Beim Einstellvorgang werden die Koordinatenschlitten des Einstellgerätes manuell oder motorisch soweit bewegt, bis im Digitalzähler 6 für die X- und Z-Achsen die vorgegebenen Einstellwerte angezeigt sind. Das Fadenkreuz der Kamera 7 befindet sich dann auf der Sollposition für die Werkzeugschneide 2.

Die Werkzeugschneide 21 kann jetzt manuell soweit nachgestellt werden, worauf sie sich auf dem Monitor 8 wie in Fig. 3 unscharf darstellt. Nunmehr kann durch Betätigen des Automatikknopfes 30 die Scharfeinstellung der Werkzeugschneide wie beim Meßvorgang entsprechend Fig. 5 herbeigeführt werden. Anschließend wird die Schneide auf dem Werkzeug manuell so verstellt, daß entweder der ΔX-Wert oder ΔZ-Wert = 0 wird. Als optisches Hilfsmittel leuchtet zu diesem Zeitpunkt die zugeordnete LED-Anzeige der Gruppe 24 oder 26 auf. ΔX entspricht dem genau eingestellten Radialwert (Abstand der Schneide von der Achse B z.B. einer Bohrstange); ΔZ = 0 entspricht dem genau eingestellten Längenmaß (Abstand der Schneide von der Werkzeugaufnahme).

Je nach Art des Werkzeuges oder seiner Schneide kann Bedarf bestehen, daß sowohl der Radius (Abstand von der Achse B) als auch die Länge auf genaue Sollwerte einzustellen sind; es gibt jedoch auch Fälle, in denen entweder nur der Radius oder nur die Länge genau eingestellt werden müssen. Das Erreichen des genauen Einstellwertes von Radius oder von Durchmesser wird durch die LED-Anzeigen auf dem Monitor dargestellt, wobei auch ein akustisches Signal von einem entsprechenden nicht gezeigten Gerät ausgegeben werden kann. Sobald die Differenzwerte = 0 sind, ist der Einstellvorgang beendet.

In den Fällen, in denen nur der X-Wert oder der Z-Wert der Werkzeugschneide eine Sollposition hat und diese Sollposition durch manuelles Einstellen am Werkzeug herbeigeführt worden ist, kann das unbestimmte Abstandsmaß bezüglich der jeweils anderen Achse durch automatischen Vermessen des Werkzeuges ermittelt werden. Dazu wird erneut der Automatikknopf 30 betätigt, um in der Vorrichtung den automatischen Meßvorgang bezüglich dieser anderen Achse einzuleiten, so daß nach Abschluß des Meßvorganges sich die Werkzeugschneide, wie in Fig. 6, genau eingestellt im Monitor darstellt. Somit gewinnt die Bedienungsperson automatisch und schnell die auf dem Digitalzähler erscheinenden X- und Z-Werte, von denen der eine Wert entsprechend der vorbestimmten Sollposition durch manuelles Nachstellen der Schneide erreicht worden ist.

Die Ausnutzung der automatischen Werkzeugvermessung beim Einstellvorgang kann auch dann zweckmäßig sein, wenn die Bedienungsperson vor dem Einstellen oder bei schon teilweise nachgestellter Werkzeugschneide den Abstand erfahren will, um den die Schneide noch von dem bekannten Sollwert in der einen oder anderen Richtung entfernt ist. Nach dieser automatischen Zwischenmessung werden die Koordinatenschlitten bzw. die Kamera wieder auf die vorgegebene, auf dem Digitalzähler 6 erscheinende Sollposition gebracht und danach die Schneide um den ermittelten Differenzwert nachgestellt.

Da bei dem einleitend beschriebenen bekannten Meßverfahren der die Kamera tragende Koordinatenschlitten manuell nur soweit verstellt wird, bis die Werkzeugschneide auf dem Monitor im allgemeinen scharf eingestellt erscheint, benötigt der dort eingesetzte Bildverarbeitungsrechner eine hohe Leistungsfähigkeit, um die Abstände in den X- und Z-Richtungen mit der erwünschten hohen Meßgenauigkeit errechnen zu können. Voraussetzung für eine hohe Meßgenauigkeit ist eine hohe Leistungsfähigkeit des optischen Systems der Kamera, damit die verfügbare Abbildung der Werkzeugschneide nicht durch optische Aberration oder andere optische Unzulänglichkeiten verfälscht wird. Die Meßgenauigkeit kann außerdem durch Beleuchtungsfehler beeinträchtigt sein, die zu ungenauer Abbildung der Schneidkanten führen. Auf diese Weise entstehende unscharfe Abbildungen können nur durch einen erhöhten baulichen Aufwand des Bildverarbeitungsrechners kompensiert werden, der den Verlauf der Graukante ermitteln muß. Je weiter die auf dem Monitor abgebildete Werkzeugschneide vom der oder den zugeordneten Koordinaten entfernt liegt, desto größer ist die Gefahr, daß der zu errechnende Abstand vom Nullpunkt des Koordinatensystems durch Fehler in der Kameraoptik und/oder durch Rechenfehler bei der Ermittlung des Graukantenverlaufes verfälscht wird.

Bei der Erfindung werden diese Probleme dadurch beseitigt, daß mit Hilfe des Bildverarbeitungsrechners und der angeschlossenen Stellmotoren automatisch nacheinanderfolgende Meß- und Annäherungsschritte durchgeführt werden, so daß die Koordinate oder der Koordinaten-Nullpunkt in einer Folge von beispielsweise zwei oder drei Schritten bis zum Null-Abgleich an die Werkzeugschneide herangebracht wird, so daß bei jeder nachfolgenden Messung etwaige Aberrationsfehler der Kameraoptik zwangsläufig beseitigt werden, da sich der Fadenkreuz-Nullpunkt im praktisch abbildungsfehlerfreien mittleren Linsenbereich befindet und danach die in diesem Bereich vor sich gehende Ermittlung des Graukantenverlaufes der Schneide genauer bzw. eindeutiger wird. - Das oben genannte Flächenarray ist eine flächige Anordnung von Fotodioden, wobei der Bildspeicher des Rechners ein elektronisches Abbild des Array enthält und bestimmte Speicherplätze oder Speicheradressen als Fadenkreuz des Koordinatensystems definiert sind.

## Patentansprüche

1. Vorrichtung zum automatischen Vermessen eines Werkzeuges auf einer Schärf-, Werkzeug- oder dergleichen Maschine, insbesondere auf einem Meß- und Einstellgerät, die einen in zwei Koordinatenrichtungen (X und Z) einer Ebene verstellbaren Schlitten mit einer auf die Werkzeugschneide ausrichtbaren Optik sowie eine Werkzeugaufnahme aufweist, mit der die Werkzeugschneide in die Koordinatenebene verstellbar ist, wobei die Optik des Schlittens eine an einen Bildverarbeitungsrechner (9) angeschlossene Kamera (7) umfaßt, die Kamera (7) ein Flächenarray (22) mit einem errechneten Fadenkreuz enthält, das als Bezugssystem dem Bildverarbeitungsrechner (9) eingespeichert ist, und der Schlitten mit vom Bildverarbeitungsrechner (9) gesteuerten Motoren (13, 14) zur Verstellung in beiden Koordinatenrichtungen versehen ist,
**dadurch gekennzeichnet,** daß
- der Fadenkreuz-Nullpunkt in der Bildfeldmitte der Kamera (7) angeordnet ist,
- der Rechner (9) ein Arbeitsprogramm enthält, mit dem ständig die Abstandswerte der Werkzeugschneide (21) von den Koordinatenachsen des Fadenkreuzes ermittelt sowie die Abstandswerte kompensierende Impulse an die Motoren (13, 14) solange abgegeben werden, bis in der neuen Werkzeugposition die Abweichungen in der X- und Z-Richtung Null sind und somit das Werkzeug (20) genau vermessen ist, und
- der Rechner (9) über eine Schnittstelle (10) mit einem Digitalzähler (6) verbunden ist, der die auf die Werkzeugaufnahme (18) bezogenen Koordinatenmeßwerte (X, Z) der Werkzeugschneide (21) anzeigt.

2. Vorrichtung nach Anspruch 1, dadurch gekennzeichnet, daß die Werkzeugaufnahme (18) einen vom Bildverarbeitungsrechner (9) derart gesteuerten Stellmotor (17) aufweist, der zu Beginn des Ablaufes des Arbeitsprogramms bei Bedarf (Unschärfe der Werkzeug-Abbildung) solange Impulse vom Rechner (9) zugeführt erhält, bis bei Scharfabbildung der Werkzeugschneide (21) sich diese in der Koordinatenebene befindet.

3. Vorrichtung nach Anspruch 1 oder 2, dadurch gekennzeichnet, daß ein insbesondere auf dem Koordinatenschlitten angeordneter Monitor (8) an den Bildverarbeitungsrechner (9) angeschlossen ist, auf dem das von der Kamera (7) gelieferte Bild einschließlich des Flächenarray (22) mit dem errechneten Fadenkreuz abgebildet sind.

4. Vorrichtung nach einem der vorhergehenden Ansprüche, dadurch gekennzeichnet, daß auf dem Monitor LED-Anzeigen (24, 26) vorgesehen sind, die nach Beendigung des Arbeitsprogramms des Bildverarbeitungsrechners (9) für die Scharfeinstellung der Werkzeugschneide (21) und für den Null-Abgleich in Richtung der X-Achse und in Richtung der Z-Achse aufleuchten.

5. Vorrichtung nach einem der vorhergehenden Ansprüche, dadurch gekennzeichnet, daß zusätzlich zu den optischen LED-Anzeigen akustische Signalgeber zur Anzeige der Beendigung des Meßvorganges in der bzw. um die jeweilige Achse vorgesehen sind.

6. Vorrichtung nach einem der vorhergehenden Ansprüche, dadurch gekennzeichnet, daß an den Bildverarbeitungsrechner (9) zusätzliche Stellmotoren zur Grobverstellung der Koordinatenschlitten in Richtung der X- und Z-Achse sowie ein Stellmotor zur Drehung der Werkzeugaufnahme (18) um die Rotationsachse (B) zwecks Scharfeinstellung der Werkzeugschneide (21) angeschlossen sind.

7. Vorrichtung nach einem der vorhergehenden Ansprüche, dadurch gekennzeichnet, daß die Koordinatenschlitten unabhängig von den Stellmotoren manuell verstellbar sind.

8. Vorrichtung nach einem der vorhergehenden Ansprüche, dadurch gekennzeichnet, daß im Bildverarbeitungsrechner (9) Sicherungsmittel vorgesehen sind, die das Arbeitsprogramm der automatischen Werkzeugvermessung erst einschalten, nachdem die Werkzeugschneide (21) mit Hilfe der der Werkzeugaufnahme (18) zugeordneten Stelleinrichtung scharf abgebildet ist.

9. Vorrichtung nach einem der vorhergehenden Ansprüche, dadurch gekennzeichnet, daß zum Starten des Arbeitsprogramms, beginnend mit der Scharfeinstellung der Werkzeugschneide (21), ein Automatikschalter (28) vorgesehen ist.

10. Vorrichtung nach einem der vorhergehenden Ansprüche, dadurch gekennzeichnet, daß sie an bestehende Einstellgeräte anbaubar ist.

11. Vorrichtung nach einem der vorhergehenden Ansprüche, dadurch gekennzeichnet, daß sie als Baugruppe an einer Werkzeug- oder Erodiermaschine zur Vermessung eingespannter Werkzeuge einsetzbar ist.

12. Verfahren zum Einstellen eines Rotations-Werkzeuges auf einem Einstellgerät unter Vervendung der Vorrichtung nach einem der Ansprüche 2-9, das einen in zwei Koordinatenrichtungen, die X- und Z Richtung, einer Ebene verstellbaren Schlitten mit einer auf die Werkzeugschneide (21) ausrichtbaren Optik sowie eine Werkzeugaufnahme (18) aufweist, mit der die Werkzeugschneide (21) in die Koordinatenebene verstellbar ist, wobei die Optik des Schlittens eine an einen Bildverarbeitungsrechner (9) angeschlossene Kamera (7) umfaßt, die Kamera (7) ein Flächenarray (22) mit einem errechneten Fadenkreuz enthält, das als Bezugssystem dem Bildverarbeitungsrechner (9) eingespeichert ist, und der Schlitten mit vom Bildverarbeitungsrechner (9) gesteuerten Motoren (13, 14) zur Verstellung in beiden Koordinatenrichtungen versehen ist, und wobei der Schlitten einen an den Bildverarbeitungsrechner (9) angeschlossenen, das Bildfeld der Kamera (7) wiedergebenden Monitor (8) aufweist, und der Rechner (9) mit einem die Koordinatenmeßwerte (X, Z) der Werkzeugschneide (21) anzeigenden Digitalzähler (6) verbunden ist, gekennzeichnet durch folgende Schritte:
a) der Schlitten wird auf die durch den Digitalzähler (6) angezeigte Sollposition für die einzustellende Werkzeugschneide (21) eingestellt,
b) die Werkzeugschneide (21) wird manuell soweit in das Bildfeld nachgestellt, bis sie auf dem Monitor (8) sichtbar ist,
c) durch Betätigen eines Automatikschalters (28) zur Ausführung der automatischen Scharfeinstellung wird die Werkzeugschneide (21) durch Drehen der Werkzeugaufnahme (18) zur Scharfabbildung auf dem Monitor (8) gebracht,
d) zur Einstellung einer Sollposition eines X- oder Z-Wertes der Werkzeugschneide (21) bezüglich einer der Fadenkreuz-Achsen wird die Werkzeug schneide (21) in der betreffenden Richtung, X oder Z, so lange manuell auf die zugehörige Achse des Fadenkreuzes verstellt, bis eine zugeordnete LED-Anzeige den Null-Abgleich signalisiert.

13. Verfahren zum Einstellen eines Rotations-Werkzeuges auf einem Einstellgerät nach Anspruch 12, gekennzeichnet durch folgenden Schritt: wenn die Werkzeugschneide (21) zwei Sollpositionen aufweist, deren Werte beide eingestellt werden sollen, wird Schritt d) aus Anspruch 12 für den betreffenden anderen Wert, Z bzw. X, durchgeführt.

14. Verfahren zum Einstellen eines Rotations-Werkzeuges auf einem Einstellgerät nach Anspruch 12, gekennzeichnet durch folgenden Schritt: wenn die Werkzeugschneide (21) nur eine Sollposition aufweist, die durch Anwendung des Verfahrens nach Anspruch 12 bereits eingestellt ist, und zusätzlich das unbestimmte Abstandsmaß bezüglich der anderen Achse ausgemessen werden soll, wird durch erneutes Betätigen des Automatikschalters (28) zur Ausführung des automatischen Meßvorgangs die Werkzeugschneide (21) solange automatisch auf die betreffende Achse des Fadenkreuzes verstellt, bis die zugehörige LED-Anzeige den Null-Abgleich signalisiert.

## Claims

1. Apparatus for the automated measurement of a tool on a machine-tool, grinding machine or the like, in particular on a measurement and adjustment device comprising a carriage displaceable in two coordinate directions (X and Z) in one plane and fitted with an optics which can be pointed at the tool cutting-edge and also with a tool holder allowing to displace the tool cutting-edge into the coordinates plane, the optics of to the carriage comprising a camera (7) connected to an image processing computer (9) with the camera (7) containing a planar array (22) with computed crosshairs stored as the reference system in the image processing computer (9), and the carriage being fitted with motors (13, 14) controlled by the image processing computer (9) for adjustment in the two coordinate directions, characterized in that
- the zero point of the crosshairs is located in the middle of the image field of the camera (7),
- the computer (9) contains an operational program constantly ascertaining the distances of the tool cutting-edge (21) from the crosshairs coordinate axes and emitting pulses compensating the distances to the motors (13, 14) until the deviations are null in the X and Z directions in the new tool position and hence the tool (20) has been accurately measured, and - the computer (9) is connected through an interface (10) to a digital counter (6) displaying the measured coordinate values (X, Z) of the tool cutting-edge (21) relative to the tool-holder.

2. Apparatus according to claim 1, characterized in that the tool holder (18) is associated with a servomotor (17) controlled in such a way by the image processing computer (9) that at the beginning of the operational program and as needed (tool image out of focus) it receives pulses from the computer (9) until this image shall be located in the coodinates plane while the tool cutting-edge (21) is shown in focus.

3. Apparatus according to claim 1 or 2, characterized in that a monitor (8) which in particular is mounted on the coordinates carriage is hooked up to the image processing computer (9), said monitor showing the image from the camera (7) inclusive the planar array (22) with the computed crosshairs.

4. Apparatus according to one of the preceding claims, characterized in that LED displays (24, 26) are provided on the monitor and light up upon termination of the operational program of the image processing computer (9) for the focusing of the tool cutting-edge (21) and the nulling in the directions of the X and Z axes.

5. Apparatus according to one of the preceding claims, characterized in that in addition to the optical LED displays, acoustic signal generators are provided to announce the end of the measurement procedure in or about the particular axes.

6. Apparatus according to one of the preceding claims, characterized in that additional servomotors for the coarse-control of the coordinate carriages in the X and Z axes directions and a servomotor to rotate the tool holder (18) about the axis of rotation (B) for purposes of focusing the tool cutting edge (21) are connected to the image processing computer (9).

7. Apparatus according to one of the preceding claims, characterized in that the coordinate carriages are manually adjustable independently of the servomotors.

8. Apparatus according to one of the preceding claims, characterized in that safety means are provided in the image processing computer (9) which only switch on the operational program for automated tool measurement after the tool cutting-edge (21) has been imaged in focus by means of the adjusting device associated with the tool holder (18).

9. Apparatus according to one of the preceding claims, characterized in that an automation switch (28) is provided to initiate the operational program, beginning with the focusing of the tool cutting-edge (21).

10. Apparatus according to one of the preceding claims, characterized in that it can be integrated into extant adjustment instruments.

11. Apparatus according to one of the preceding claims, characterized in that it can be intergrated in the form of a sub-assembly into a machine-tool or an erosion machine to measure clamped tools.

12. A method to adjust a rotating tool on an adjusting device using the apparatus according to one of the claims 2 to 9, said device comprising a carriage displaceable in two coordinate directions, namely the X and Z directions, in one plane and fitted with an optics which can be pointed at the tool cutting-edge (21) and also with a tool holder (18) allowing to displace the tool cutting-edge (21) into the coordinates plane, the optics of the carriage comprising a camera (7) connected to an image processing computer (9) with the camera (7) containing a planar array (22) with computed crosshairs stored as the reference system in the image processing computer (9), and the carriage being fitted with motors (13, 14) controlled by the image processing computer (9) for adjustment in the two coordinate directions, the carriage further comprising a monitor (8) hooked up to the image processing computer (9) and showing the image from the camera (7), and the computer (9) being connected to a digital counter (6) displaying the measured coordinate values X, Z of the tool cutting-edge (21), characterized in that:
a) the carriage is adjusted to the reference position for the tool cutting-edge (21) to be positioned displayed by the digital counter (6),
b) the tool cutting-edge (21) is manually adjusted so far into the image field that it becomes visible on the monitor (8),
c) by actuating the automation switch (28) to carry out the automated focusing, the tool cutting-edge (21) is focused on the monitor (8) by rotating the tool holder (18),
d) to adjust a reference position of a X or Z value of the tool cutting-edge (21) with reference to one of the crosshairs axes, the tool cutting-edge (21) is manually adjusted on the corresponding axis of the crosshairs in the respective direction, X or Z, until a related LED display signals the nulling.

13. Method to adjust a rotating tool on an adjusting device according to claim 12, characterized in the following step:
if the tool cutting-edge (21) has two reference positions whose values have to be adjusted both, step d) from claim 12 is performed for the respective other value Z or X.

14. Method to adjust a rotating tool on an adjusting device according to claim 12, characterized in the following step:
if the tool cutting-edge (21) has only one reference position already adjusted by performing the method according to claim 12 and the yet undetermined distance relating to the other axis has to be measured additionally, the tool cutting-edge (21) is adjusted automatically on the respective axis of the crosshairs by actuating again the automation switch (28) to initiate the automated measurement until the respective LED display signals the nulling.

## Revendications

1. Dispositif destiné à la mesure automatique d'un outil sur une machine à affûter, une machine-outil ou analogue, notamment sur un appareil de mesure et de réglage, comportant un coulisseau pouvant être déplacé dans deux directions de coordonnées X et Z d'un plan, qui est muni d'une optique pouvant être orientée sur le tranchant de l'outil, ainsi que d'un porte-outil au moyen duquel le tranchant de l'outil peut être déplacé dans le plan de coordonnées, l'optique du coulisseau comportant une caméra (7) qui est raccordée à un calculateur (9) de traitement d'image, la caméra (7) contenant un réseau de surface (22) avec un réticule à croisillon déterminé par calcul, qui est mémorisé dans le calculateur (9) de traitement d'image en tant que système de référence, et le coulisseau étant muni de moteurs (13, 14) pouvant être commandés par le calculateur (9) de traitement d'image, qui sont destinés au déplacement dans les deux directions de coordonnées,
caractérisé en ce que,
- le point zéro du réticule à croisillon est disposé au milieu du champ d'image de la caméra (7),
- le calculateur (9) contient un programme de travail avec lequel les valeurs d'écartement du tranchant (21) de l'outil par rapport aux axes des coordonnées du réticule à croisillon sont déterminées en permanence, et qui délivre aux moteurs (13, 14) des impulsions qui compensent les valeurs d'écartement jusqu'à ce que les différences en direction X et Z soient nulles dans la nouvelle position de l'outil, et que l'outil (20) soit par conséquent mesuré avec précision, et
- le calculateur (9) est relié par l'intermédiaire d'une interface (10) à un compteur numérique (6), qui affiche les valeurs de mesure des coordonnées (X, Z) du tranchant (21) de l'outil par rapport au porte-outil (18).

2. Dispositif selon la revendication 1, caractérisé en ce que le porte-outil (18) comporte un servomoteur (17) commandé par le calculateur (9) de traitement d'image de telle sorte qu'au début du déroulement du programme de travail celui-ci reçoive, en cas de besoin (manque de netteté de la reproduction de l'outil), des impulsions du calculateur (9) jusqu'à ce que la reproduction du tranchant (21) de l'outil soit nette et que ce dernier se trouve dans le plan de coordonnées.

3. Dispositif selon la revendication 1 ou 2, caractérisé en ce qu'un moniteur (8), qui est notamment disposé sur le coulisseau de coordonnées, est raccordé au calculateur (9) de traitement d'image, sur lequel est reproduite l'image délivrée par la caméra (7), y compris le réseau de surface (22) avec le réticule à croisillon déterminé par calcul.

4. Dispositif selon l'une quelconque des revendications précédentes, caractérisé en ce que des affichages à LED (24, 26) sont prévus sur le moniteur, qui s'allument à la fin du programme de travail du calculateur (9) de traitement d'image pour la mise au point du tranchant (21) de l'outil et pour la compensation à zéro en direction de l'axe X et en direction de l'axe Z.

5. Dispositif selon l'une quelconque des revendications précédentes, caractérisé en ce que des émetteurs de signaux acoustiques sont prévus en plus des affichages optiques à LED, qui sont destinés à indiquer la fin du processus de mesure dans ou autour de chaque axe.

6. Dispositif selon l'une quelconque des revendications précédentes, caractérisé en ce que des servomoteurs supplémentaires sont raccordés au calculateur (9) de traitement d'image, qui sont destinés au déplacement de dégrossissage des coulisseaux de coordonnées en direction de l'axe X et Z, ainsi qu'un servomoteur qui est destiné à tourner le porte-outil (18) autour de l'axe de rotation (B) pour la mise au point du tranchant (21) de l'outil.

7. Dispositif selon l'une quelconque des revendications précédentes, caractérisé en ce que les coulisseaux de coordonnées peuvent être déplacés manuellement indépendamment des servomoteurs.

8. Dispositif selon l'une quelconque des revendications précédentes, caractérisé en ce que des moyens de sécurité sont prévus dans le calculateur (9) de traitement d'image, qui ne déclenchent le programme de travail de la mesure automatique de l'outil qu'après que le tranchant (21) de l'outil a été reproduit nettement à l'aide du dispositif de réglage associé au porte-outil (18).

9. Dispositif selon l'une quelconque des revendications précédentes, caractérisé en ce qu'un commutateur automatique (28) est prévu pour déclencher le programme de travail au début de la mise au point du tranchant (21) de l'outil.

10. Dispositif selon l'une quelconque des revendications précédentes, caractérisé en ce qu'il peut être monté sur des appareils de réglage existants.

11. Dispositif selon l'une quelconque des revendications précédentes, caractérisé en ce qu'il peut être utilisé en tant que module pour mesurer des outils montés sur une machine-outil ou une machine à érosion.

12. Procédé destiné au réglage d'un outil rotatif sur un appareil de réglage en utilisant le dispositif selon l'une quelconque des revendications 2 à 9, comportant un coulisseau pouvant être déplacé dans deux directions de coordonnées X et Z d'un plan, qui est muni d'une optique pouvant être orientée sur le tranchant (21) de l'outil, ainsi que d'un porte-outil (18) au moyen duquel le tranchant (21) de l'outil peut être déplacé dans le plan de coordonnées, l'optique du coulisseau comportant une caméra (7) qui est raccordée à un calculateur (9) de traitement d'image, la caméra (7) contenant un réseau de surface (22) avec un réticule à croisillon déterminé par calcul, qui est mémorisé dans le calculateur (9) de traitement d'image en tant que système de référence, et le coulisseau étant muni de moteurs (13, 14) pouvant être commandés par le calculateur (9) de traitement d'image, qui sont destinés au déplacement dans les deux directions de coordonnées, le coulisseau comportant un moniteur (8) restituant le champ d'image de la caméra (7), qui est raccordé au calculateur (9) de traitement d'image, et le calculateur (9) étant relié à un compteur numérique (6) qui affiche les valeurs de mesure des coordonnées (X, Z) du tranchant (21) de l'outil, caractérisé par les phases suivantes :
a) le coulisseau est réglé sur la position théorique affichée par le compteur numérique (6) pour le tranchant (21) de l'outil à régler,
b) le tranchant (21) de l'outil est réajusté manuellement dans le champ d'image jusqu'à ce qu'il apparaisse sur le moniteur (8),
c) par l'actionnement d'un commutateur automatique (28) destiné à l'exécution de la mise au point automatique, le tranchant (21) de l'outil est amené pour la mise au point sur le moniteur (8) par la rotation du porte-outil (18),
d) pour le réglage d'une position théorique d'une valeur X ou Z du tranchant (21) de l'outil par rapport à l'un des axes du réticule à croisillon, le tranchant (21) de l'outil est déplacé manuellement sur l'axe associé du réticule à croisillon dans la direction X ou Z concernée jusqu'à ce qu'un affichage à LED associé signale la compensation à zéro.

13. Procédé destiné au réglage d'un outil rotatif sur un appareil de réglage selon la revendication 12, caractérisé par la phase suivante :
lorsque le tranchant (21) de l'outil comporte deux positions théoriques, dont les deux valeurs doivent être réglées, la phase d) selon la revendication 12 est exécutée pour l'autre valeur Z ou X concernée.

14. Procédé destiné au réglage d'un outil rotatif sur un appareil de réglage selon la revendication 12, caractérisé par la phase suivante :
lorsque le tranchant (21) de l'outil ne comporte qu'une seule position théorique, qui est déjà réglée par la mise en oeuvre du procédé selon la revendication 12, et qu'en plus la cote d'écartement non défini par rapport à l'autre axe doit être mesurée, le tranchant (21) de l'outil est déplacé automatiquement sur l'axe concerné du réticule à croisillon par un nouvel actionnement du commutateur automatique (28) destiné à l'exécution automatique du processus de mesure, jusqu'à ce que l'affichage à LED associé signale la compensation à zéro.
